# EUROPEAN PATENT APPLICATION

(11) **EP 4 807 450 A1**
(43) Date of publication of application: **16.09.2026**
(21) Application number: 26164453.8
(22) Date of filing: 12.03.2026
(51) Int. Cl.: G03G 15/00

(54) **PRINTING DEVICE AND OPERATION UNIT**

(30) Priority: 14.03.2025 JP 2025041047
(71) Applicant: Seiko Epson Corporation, Tokyo 160-8801 (JP)
(72) Inventor: NAGUMO, Takaho, Suwa-shi, 392-8502 (JP)
(74) Representative: Lewis Silkin LLP

(57) **Abstract**

A printing device includes a display panel including a display region that displays a touch key; a power saving operation switch that switches a power saving mode; and a support housing that supports the display panel so that the display panel is visible on a support surface having a first side and a second side facing the first side, wherein when the user is positioned at an operation position where the user operates the display panel, the first side is arranged at a position closer to the user than the second side and the power saving operation switch is arranged on a side of the first side with respect to the display region.

## Description

The present application is based on, and claims priority from JP Application Serial Number 2025-041047, filed March 14, 2025, the disclosure of which is hereby incorporated by reference herein in its entirety.

### BACKGROUND

### 1. Technical Field

The present disclosure relates to a printing device and an operation unit.

### 2. Related Art

An image forming device including an operation screen using a touch panel is known. The image forming device is an example of a printing device. The image forming device described in JP-A-2020-123177 includes an operation section that is an example of an operation unit. The operation section includes a display section in which a screen display by an LCD and a touch panel are arranged in an overlapping manner. The display section displays a "power saving" button for shifting an operation mode to a power saving mode.

When the power saving button is displayed on the display section, it may be difficult for a user to immediately find the power saving button.

### SUMMARY

A printing device of the present disclosure includes a display panel including a display region that displays a touch key that receives touch input by a user; a power saving operation switch that receives switching input for switching a power saving mode; and a support housing that includes a support surface having a first side and a second side facing the first side, and that supports the display panel so that the display panel is visible on the support surface, wherein when the user is positioned at an operation position where the user operates the display panel, the first side is arranged at a position closer to the user than the second side and the power saving operation switch is arranged on a side of the first side with respect to the display region.

An operation unit of the present disclosure is an operation unit arranged in a printing device with a first side of a support surface included in a support housing facing outward, the operation unit including a display panel including a display region that displays a touch key that receives touch input by a user and a power saving operation switch that receives switching input for switching a power saving mode, wherein the support surface has a second side facing the first side and supports the display panel so that the display panel is visible and the power saving operation switch is arranged on a side of the first side with respect to the display region.

### BRIEF DESCRIPTION OF THE DRAWINGS

FIG. 1 is a diagram illustrating an external configuration of a printer.
FIG. 2 is a diagram illustrating a schematic configuration of the printer.
FIG. 3 is a diagram illustrating an external configuration of the printer.
FIG. 4 is a diagram illustrating an external configuration of the printer.
FIG. 5 is a diagram illustrating a schematic configuration of an operation section.
FIG. 6 is a diagram illustrating a schematic configuration of the operation section.
FIG. 7 is a diagram illustrating a schematic configuration of the operation section.
FIG. 8 is a diagram illustrating a schematic configuration of the operation section.
FIG. 9 is a diagram illustrating a schematic configuration of a control panel.
FIG. 10 is a diagram illustrating a schematic configuration of the operation section.
FIG. 11 is a diagram illustrating a schematic configuration of the operation section.

### DESCRIPTION OF EMBODIMENTS

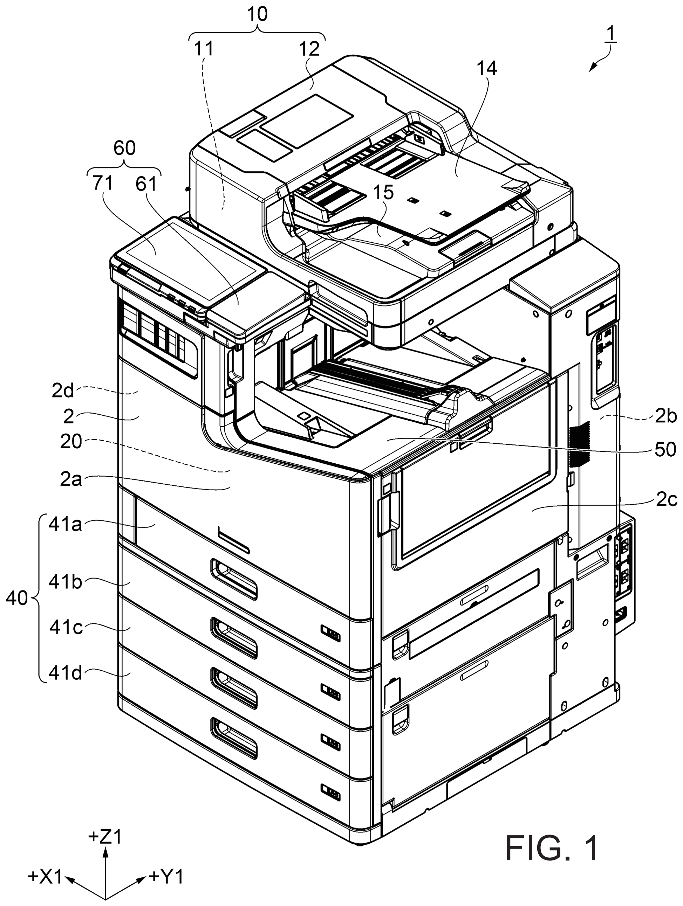

FIG. 1 illustrates an external configuration of a printer 1. FIG. 1 is a perspective view illustrating an external appearance of the printer 1. The printer 1 corresponds to an example of a printing device. The printer 1 has a reading function of reading a document and a printing function of performing printing on a paper sheet S. The printer 1 may have a fax function of sending and receiving faxes, and the like. The printer 1 includes a device housing 2.

FIG. 1 and the like illustrate a coordinate system including an X1-axis, a Y1-axis, and a Z1-axis. The Z1-axis is an axis orthogonal to an installation surface of the printer 1. A +Z1 direction is a direction from the installation surface toward an upper side. A - Z1 direction is a direction from above toward the installation surface. The X1-axis is an axis orthogonal to the Z1-axis. A +X1 direction is a direction from right to left in plan view of a front surface 2a of the printer 1. A -X1 direction is a direction from left to right in plan view of the front surface 2a of the printer 1. The Y1-axis is an axis orthogonal to the X1-axis and the Z1-axis. A +Y1 direction is a direction from the front surface 2a of the printer 1 toward a rear side. A -Y1 direction is a direction from the rear side of the printer 1 toward the front surface 2a.

The device housing 2 constitutes an external appearance of the printer 1. The device housing 2 is configured in a shape of a rectangular parallelepiped including the front surface 2a, a rear surface 2b, a first side surface 2c, and a second side surface 2d. The device housing 2 includes an image reading unit 10, a paper sheet feeding unit 40, a paper sheet discharge section 50, and an operation section 60. The device housing 2 accommodates a printing mechanism 20. The printing mechanism 20 will be described in detail later.

The front surface 2a is a surface facing a user who faces a control panel 71. The user is positioned at a facing position facing the front surface 2a and operates the control panel 71. The facing position corresponds to an example of an operation position. The rear surface 2b is provided at a position in the +Y1 direction of the front surface 2a, and is a surface facing the front surface 2a. The first side surface 2c is a surface that is connected to the front surface 2a and that is provided in the -X1 direction of the front surface 2a. The second side surface 2d is a surface that is connected to the front surface 2a and that is provided in the +X1 direction of the front surface 2a.

The image reading unit 10 includes a document placement section support housing 11 and an ADF support housing 12. ADF is an abbreviation for automatic document feeder. The image reading unit 10 accommodates a reading mechanism (not illustrated).

The document placement section support housing 11 supports a document placement section (not illustrated). The document placement section support housing 11 accommodates a part of the reading mechanism such as an image reading sensor. The document placement section support housing 11 pivotably supports the ADF support housing 12. The document placement section support housing 11 is arranged at a position in the +Z1 direction of the device housing 2.

The ADF support housing 12 has a function of transporting a document. The ADF support housing 12 accommodates a part of the reading mechanism such as an image reading sensor. The ADF support housing 12 is configured to be pivotable about an ADF pivot axis RA with respect to the document placement section support housing 11. The ADF support housing 12 is arranged at a position in the +Z1 direction of the document placement section support housing 11. The ADF support housing 12 includes a document placement tray 14, a document transport mechanism (not illustrated), and a document discharge tray 15.

The document placement tray 14 is configured to place one or more documents thereon. The document placement tray 14 is provided on a surface of the ADF support housing 12 in the +Z1 direction. A document placed on the document placement tray 14 is transported by the document transport mechanism.

The document transport mechanism is provided inside the ADF support housing 12. The document transport mechanism transports a document supplied from the document placement tray 14 toward the document discharge tray 15. The document transport mechanism transports a document toward the image reading sensor and causes the image reading sensor to read the document.

The document discharge tray 15 places a document transported by the document transport mechanism. The document discharge tray 15 places a document read by the image reading sensor. The document discharge tray 15 is provided at a position in the -Z1 direction of the document placement tray 14.

The paper sheet feeding unit 40 accommodates the paper sheet S to be printed by the printing mechanism 20. The paper sheet feeding unit 40 is provided so as to be accessible from the front surface 2a. The paper sheet feeding unit 40 illustrated in FIG. 1 includes a first paper sheet feeding cassette 41a, a second paper sheet feeding cassette 41b, a third paper sheet feeding cassette 41c, and a fourth paper sheet feeding cassette 41d.

The first paper sheet feeding cassette 41a accommodates one or more paper sheets S. The first paper sheet feeding cassette 41a is arranged at a position in the -Z1 direction of the printing mechanism 20. The first paper sheet feeding cassette 41a is provided so as to be insertable into and removable from the device housing 2 in parallel or substantially in parallel to the Y1-axis.

The second paper sheet feeding cassette 41b accommodates one or more paper sheets S. The second paper sheet feeding cassette 41b is arranged at a position in the -Z1 direction of the printing mechanism 20 and the first paper sheet feeding cassette 41a. The second paper sheet feeding cassette 41b is provided so as to be insertable into and removable from the device housing 2 in parallel or substantially in parallel to the Y1-axis. The second paper sheet feeding cassette 41b accommodates the paper sheet S of the same size as or a different size from the paper sheet S accommodated in the first paper sheet feeding cassette 41a.

The third paper sheet feeding cassette 41c accommodates one or more paper sheets S. The third paper sheet feeding cassette 41c is arranged at a position in the -Z1 direction of the second paper sheet feeding cassette 41b. The third paper sheet feeding cassette 41c is provided so as to be insertable into and removable from the device housing 2 in parallel or substantially in parallel to the Y1-axis. The third paper sheet feeding cassette 41c accommodates the paper sheet S of the same size as or a different size from the paper sheet S accommodated in the first paper sheet feeding cassette 41a and the second paper sheet feeding cassette 41b.

The fourth paper sheet feeding cassette 41d accommodates one or more paper sheets S. The fourth paper sheet feeding cassette 41d is arranged at a position in the -Z1 direction of the third paper sheet feeding cassette 41c. The fourth paper sheet feeding cassette 41d is provided so as to be insertable into and removable from the device housing 2 in parallel or substantially in parallel to the Y1-axis. The fourth paper sheet feeding cassette 41d accommodates the paper sheet S of the same size as or a different size from the paper sheet S accommodated in the first paper sheet feeding cassette 41a and the like.

The paper sheet feeding unit 40 illustrated in FIG. 1 includes the first paper sheet feeding cassette 41a, the second paper sheet feeding cassette 41b, the third paper sheet feeding cassette 41c, and the fourth paper sheet feeding cassette 41d, but is not limited thereto. The paper sheet feeding unit 40 includes one or more paper sheet feeding cassettes.

The paper sheet discharge section 50 places the paper sheet S printed by the printing mechanism 20. The paper sheet discharge section 50 is provided at a position in the +Z1 direction of the printing mechanism 20 and in the -Z1 direction of the image reading unit 10. The paper sheet discharge section 50 is configured to be able to take out the printed paper sheet S from the front surface 2a or the first side surface 2c.

The operation section 60 receives an input operation by a user. The operation section 60 is provided at a position in the +Z1 direction of the device housing 2. The operation section 60 is arranged at a position where it can be operated by the user facing the front surface 2a. The user operates the operation section 60 at the facing position facing the front surface 2a. The operation section 60 includes a card reading unit 61 and the control panel 71.

The card reading unit 61 reads unique information stored in an integrated circuit (IC) card possessed by a user. The card reading unit 61 compares the read unique information with user information stored in advance. The card reading unit 61 performs user authentication by comparing the unique information with the user information. The card reading unit 61 is arranged on a surface of the operation section 60 in the +Z1 direction.

The control panel 71 receives an input operation by a user. The control panel 71 corresponds to an example of an operation unit. The control panel 71 is provided on a surface of the operation section 60 in the +Z1 direction. The control panel 71 is arranged at a position in the +X1 direction of the card reading unit 61.

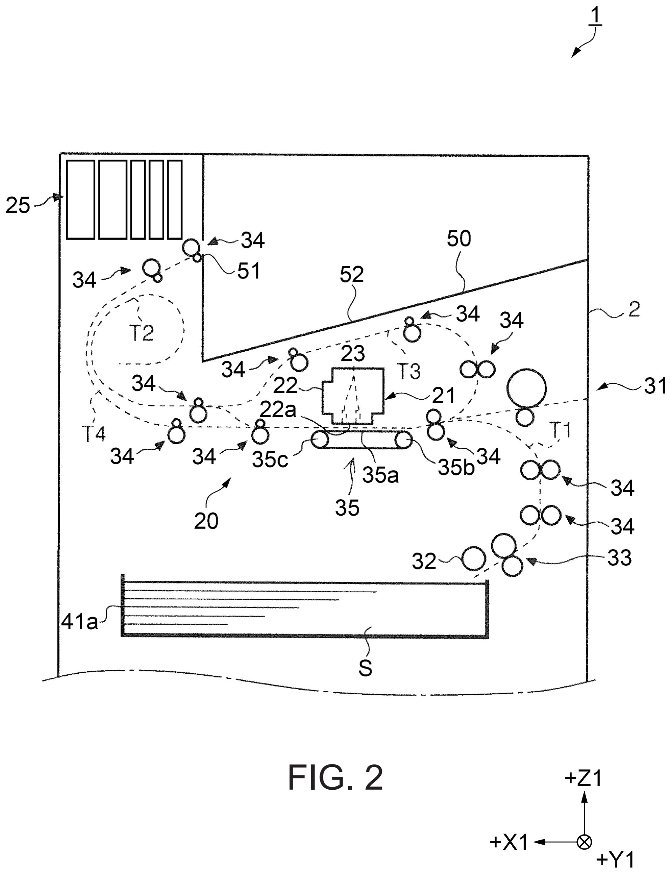

FIG. 2 illustrates a schematic configuration of the printer 1. FIG. 2 illustrates an X1-Z1 cross section of the printer 1. FIG. 2 illustrates a schematic configuration of the printing mechanism 20. The printing mechanism 20 is accommodated in the device housing 2. FIG. 2 illustrates the first paper sheet feeding cassette 41a, which is a part of the paper sheet feeding unit 40, and the paper sheet discharge section 50.

The printing mechanism 20 performs printing on the paper sheet S. The printing mechanism 20 transports the paper sheet S to a predetermined position. The printing mechanism 20 performs printing on the paper sheet S transported to the predetermined position. The printing mechanism 20 includes a printing section 21 and a paper sheet transport section 31.

The printing section 21 prints on the paper sheet S by ejecting ink onto the paper sheet S. The printing section 21 is configured by an inkjet type mechanism. The printing section 21 is not limited to the inkjet type mechanism. The printing section 21 may be configured by a mechanism of an electrophotographic type or a dot impact type. The printing section 21 includes a print head 22 and an ink accommodation section 25.

The print head 22 ejects ink toward the paper sheet S transported by the paper sheet transport section 31. The print head 22 prints an image on the paper sheet S by ejecting ink toward the paper sheet S. The print head 22 is movably supported by a carriage (not illustrated), for example. The print head 22 includes a nozzle surface 22a facing the paper sheet S. A plurality of nozzles 23 are formed in the nozzle surface 22a. The plurality of nozzles 23 respectively eject ink. The print head 22 ejects ink of one or a plurality of colors accommodated in the ink accommodation section 25 onto the paper sheet S.

The ink accommodation section 25 accommodates one or more inks to be supplied to the print head 22. The ink accommodation section 25 is formed of an ink tank, for example. The ink tank is a container that accommodates ink supplied from an ink bottle. The ink tank is fixedly arranged in the device housing 2. The ink accommodation section 25 is not limited to an ink tank. The ink accommodation section 25 may be configured by an ink cartridge.

The paper sheet transport section 31 transports the paper sheet S from the paper sheet feeding unit 40 toward the paper sheet discharge section 50. The paper sheet transport section 31 transports the paper sheet S along a feed path T1, a switchback path T2, an inversion path T3, and a discharge path T4. The paper sheet transport section 31 includes a pickup roller 32, a separation roller pair 33, a plurality of transport roller pairs 34, and a belt unit 35.

The feed path T1 is a path that transports the paper sheet S accommodated in the paper sheet feeding unit 40 toward the belt unit 35. FIG. 2 illustrates the feed path T1 that transports the paper sheet S accommodated in the first paper sheet feeding cassette 41a toward the belt unit 35.

The switchback path T2 is a path that guides the paper sheet S printed by the printing section 21 to the inversion path T3. The switchback path T2 is provided at a position in the +X1 direction of the printing section 21. The switchback path T2 switches a transport direction of the paper sheet S.

The inversion path T3 is a path that transports the paper sheet S transported from the switchback path T2 toward the belt unit 35. The inversion path T3 is provided at a position in the +Z1 direction of the printing section 21. By transporting the paper sheet S to the inversion path T3, a surface of the paper sheet S facing the nozzle surface 22a of the print head 22 is inverted from a first surface to a second surface. The first surface is a print surface of the paper sheet S transported to the switchback path T2. The second surface is a back surface of the print surface of the paper sheet S transported to the switchback path T2.

The discharge path T4 is a path that transports the paper sheet S printed by the printing section 21 toward the paper sheet discharge section 50. The discharge path T4 is provided at a position in the +X1 direction of the printing section 21. The paper sheet S is transported along the discharge path T4 and discharged from a discharge port 51 to the paper sheet discharge section 50. The discharge port 51 is an opening through which the paper sheet S is discharged from the inside of the device housing 2. The discharge port 51 discharges the paper sheet S transported by the transport roller pair 34 to the paper sheet discharge section 50. The paper sheet S discharged from the discharge port 51 is placed on a paper sheet placement surface 52 of the paper sheet discharge section 50.

The pickup roller 32 feeds the paper sheet S accommodated in the first paper sheet feeding cassette 41a or the like to the feed path T1. The plurality of paper sheet feeding cassettes are individually provided with the pickup rollers 32. FIG. 2 illustrates the pickup roller 32 that feeds the paper sheet S accommodated in the first paper sheet feeding cassette 41a or the like to the feed path T1. The pickup roller 32 is rotationally driven by a drive force of a drive source (not illustrated). The pickup roller 32 is driven to rotate to feed the paper sheet S to the feed path T1.

The separation roller pair 33 separates the paper sheet S fed by the pickup roller 32 into one paper sheet S. When the pickup roller 32 feeds a plurality of paper sheets S to the feed path T1, the separation roller pair 33 separates one paper sheet S from the plurality of paper sheets S and feeds the one paper sheet S to the feed path T1. The separation roller pair 33 is arranged for each of the plurality of pickup rollers 32. The separation roller pair 33 is rotationally driven by the drive force of the drive source. The separation roller pair 33 is driven to rotate to feed one paper sheet S to the feed path T1.

The plurality of transport roller pairs 34 are arranged along the feed path T1, the switchback path T2, the inversion path T3, and the discharge path T4. The plurality of transport roller pairs 34 each transport the paper sheet S in a predetermined transport direction. The number of the transport roller pairs 34 is set as appropriate. The transport roller pair 34 is rotationally driven by the drive force of the drive source. The transport roller pair 34 is driven to rotate to transport the paper sheet S.

The belt unit 35 is arranged at a position facing the nozzle surface 22a of the print head 22. The belt unit 35 is arranged at a position in the -Z1 direction of the nozzle surface 22a. The belt unit 35 supports and transports the paper sheet S onto which ink is ejected by the print head 22. The belt unit 35 includes a transport belt 35a, a first roller 35b, and a second roller 35c.

The transport belt 35a supports the paper sheet S transported along the feed path T1 and transports the paper sheet S to a position facing the nozzle surface 22a. The transport belt 35a transports the paper sheet S in parallel or substantially in parallel with the X1-axis. The transport belt 35a transports the paper sheet S in the +X1 direction.

The first roller 35b and the second roller 35c stretch the transport belt 35a. The first roller 35b and the second roller 35c rotationally drive the transport belt 35a. The first roller 35b is rotated by power of a belt drive motor (not illustrated), for example. The second roller 35c is driven to rotate by rotation of the transport belt 35a.

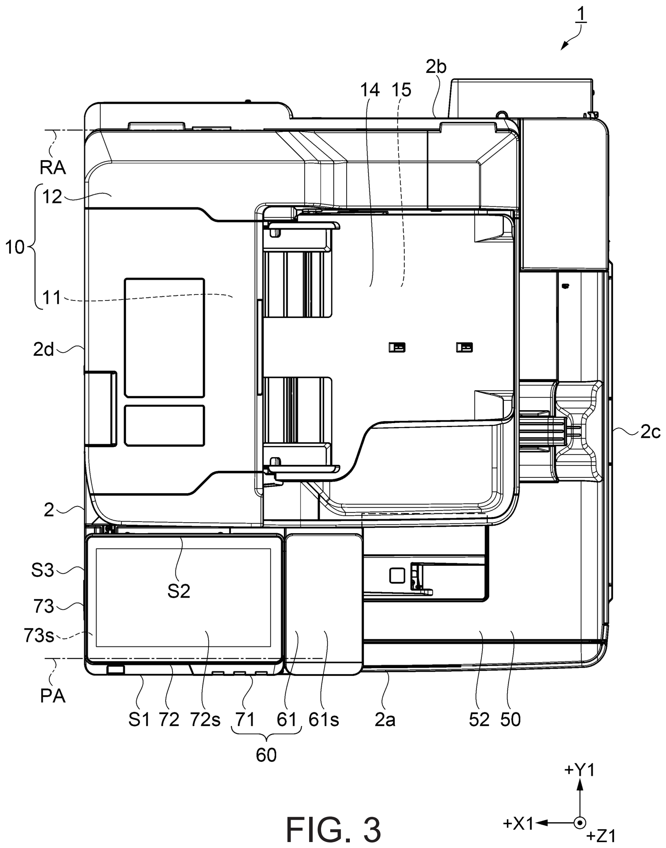

FIG. 3 illustrates an external configuration of the printer 1. FIG. 3 illustrates the external configuration of the printer 1 in plan view from the +Z1 direction. FIG. 3 illustrates an arrangement of the image reading unit 10, the paper sheet discharge section 50, and the operation section 60. FIG. 3 virtually illustrates the ADF pivot axis RA and a panel pivot axis PA.

The image reading unit 10 is arranged at a position in the +X1 direction and the +Y1 direction on a surface of the device housing 2 in the +Z1 direction. The ADF support housing 12 is configured to be pivotable about the ADF pivot axis RA. The ADF pivot axis RA is an axis parallel or substantially parallel to the X1-axis.

The paper sheet discharge section 50 includes a paper sheet placement surface 52. The paper sheet placement surface 52 places one or more paper sheets S printed by the printing mechanism 20. The paper sheet placement surface 52 is provided at a position where a part thereof is visible in plan view from the +Z1 direction.

The operation section 60 is arranged at a position in the +X1 direction and the - Y1 direction on a surface in the +Z1 direction of the device housing 2. The operation section 60 is arranged at a position in the -Y1 direction of the image reading unit 10. A surface of the operation section 60 in the +Z1 direction is arranged so as to be visible to a user.

The card reading unit 61 is arranged at a position in the -Y1 direction on a surface in the +Z1 direction of the device housing 2. The card reading unit 61 includes a reading surface 61s. The reading surface 61s is a surface of the card reading unit 61 in the +Z1 direction. A user causes the card reading unit 61 to read an IC card by bringing the IC card into contact with or close to the reading surface 61s.

The control panel 71 is arranged at a position in the +X1 direction and the -Y1 direction on a surface in the +Z1 direction of the device housing 2. The control panel 71 includes a touch panel 72 and a panel support housing 73.

The touch panel 72 has a display function of displaying a display screen 100 including various images, and an input function of receiving touch input by a user. The touch panel 72 corresponds to an example of a display panel. The touch panel 72 includes a panel surface 72s. The panel surface 72s is a surface on which the display screen 100 is displayed and a surface that receives touch input by a user. The panel surface 72s corresponds to an example of a display surface.

The panel support housing 73 supports the touch panel 72 so that the touch panel 72 is visible to a user. The panel support housing 73 corresponds to an example of a support housing. The panel support housing 73 includes a panel support surface 73s. The panel support surface 73s is a surface of the panel support housing 73 in the +Z1 direction. The panel support housing 73 supports the touch panel 72 on the panel support surface 73s. The panel support surface 73s corresponds to an example of a support surface. The panel support surface 73s includes a first end S1, a second end S2, and a third end S3.

The first end S1 is a side section connected to a side surface in the -Y1 direction of the panel support housing 73 in the panel support surface 73s. The first end S1 is an end section of the panel support housing 73 in the -Y1 direction. The first end S1 is arranged at a position closer to a user than the second end S2 and the touch panel 72 when the user is positioned at the facing position where the user faces the front surface 2a. The first end S1 is arranged on an outer peripheral side of the device housing 2 with respect to the second end S2 and the touch panel 72. The first end S1 is arranged facing the outside of the printer 1. The first end S1 corresponds to an example of a first side.

The second end S2 is a side section connected to a side surface in the +Y1 direction of the panel support housing 73 in the panel support surface 73s. The second end S2 faces the first end S1. The second end S2 is arranged on a side of the image reading unit 10 with respect to the first end S1 and the touch panel 72. The second end S2 is arranged inside the device housing 2 with respect to the first end S1 and the touch panel 72. The second end S2 corresponds to an example of a second side.

The third end S3 is a side section connected to a side surface in the +X1 direction of the panel support housing 73 in the panel support surface 73s. The third end S3 is an end section of the panel support housing 73 in the +X1 direction. The third end S3 intersects the first end S1 and the second end S2, and is connected to the first end S1 and the second end S2. The third end S3 corresponds to an example of a third side.

The panel support housing 73 is configured to be pivotable about the panel pivot axis PA. The panel pivot axis PA is an axis parallel or substantially parallel to the X1-axis. The panel support housing 73 pivots, and thus the second end S2 moves in the +Z1 direction and the -Y1 direction.

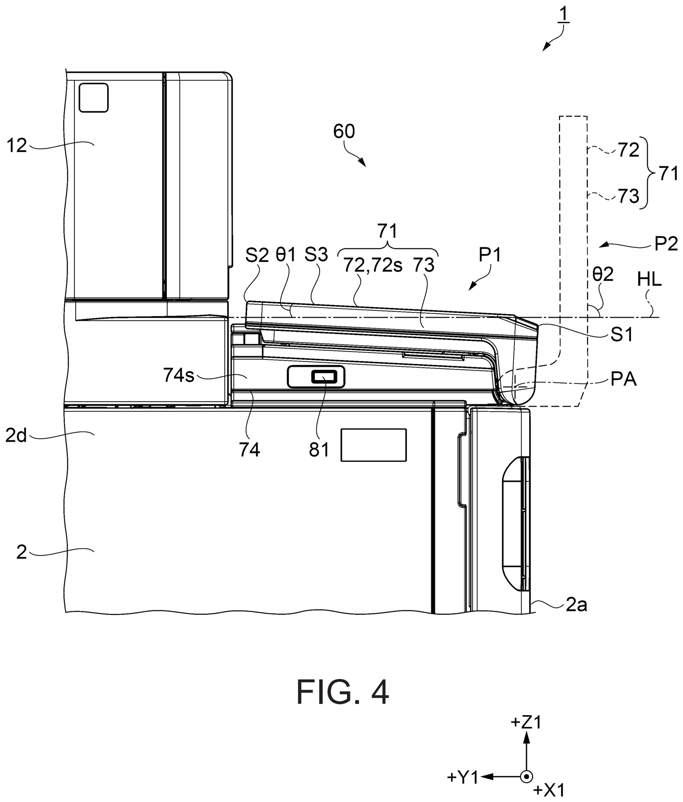

FIG. 4 illustrates an external configuration of the printer 1. FIG. 4 illustrates the external configuration of the printer 1 when viewed from the +X1 direction. FIG. 4 illustrates an enlarged external configuration of the vicinity of the operation section 60. FIG. 4 illustrates the panel support housing 73 at a stored position P1 and a standing position P2. FIG. 4 illustrates the panel support housing 73 at the standing position P2 by a broken line. FIG. 4 illustrates a virtual horizontal line HL.

The operation section 60 includes an operation section base body 74. The operation section base body 74 supports the card reading unit 61 and the panel support housing 73. The operation section base body 74 supports the control panel 71 via the panel support housing 73. The operation section base body 74 corresponds to an example of a unit base body. The operation section base body 74 is arranged at a position in the -Z1 direction of the panel support housing 73 at the stored position P1.

The operation section base body 74 includes a base body side surface 74s. The base body side surface 74s corresponds to an example of a unit side surface. The base body side surface 74s is arranged on a third end S3 side of the panel support housing 73. The base body side surface 74s is arranged at a position in the -Z1 direction of a side surface in the +X1 direction of the panel support housing 73 that is connected to the third end S3. A connection terminal 81 is provided on the base body side surface 74s.

The connection terminal 81 is configured to be connectable to an external device such as an external memory directly or via a connection cable. The external device corresponds to an example of an external apparatus. The connection terminal 81 is configured by a universal serial bus (USB) terminal, a high-definition multimedia interface (HDMI) terminal, or the like. HDMI is a registered trademark. The connection terminal 81 corresponds to an example of a connector. The USB terminal includes various types such as a type A, a type B, a type C, and a micro type.

The printer 1 further includes the operation section base body 74 that supports the panel support housing 73. The panel support surface 73s includes the third end S3 connected to the first end S1 and the second end S2. The operation section base body 74 includes the base body side surface 74s arranged on a third end S3 side, and it is desirable that the base body side surface 74s is provided with the connection terminal 81 for connecting to the external device.

By providing the connection terminal 81 on the base body side surface 74s of the operation section base body 74, a user can attach and detach an external memory or the like without erroneously touching the touch panel 72 or the like.

The panel support housing 73 is configured to pivot about the panel pivot axis PA and to be movable between the stored position P1 and the standing position P2. The panel support housing 73 is configured to be able to stop at a position between the stored position P1 and the standing position P2. A tilt angle of the touch panel 72 with respect to the virtual horizontal line HL changes as the panel support housing 73 pivots.

When the panel support housing 73 is positioned at the stored position P1, the panel surface 72s of the touch panel 72 is arranged at a first tilt angle θ1 with respect to the virtual horizontal line HL. The first tilt angle θ1 is set to, for example, not less than 1° and not more than 10°. When the panel support housing 73 is positioned at the stored position P1, the panel surface 72s is arranged facing upward in the +Z1 direction.

When the panel support housing 73 is positioned at the standing position P2, the panel surface 72s of the touch panel 72 is arranged at a second tilt angle θ2 with respect to the virtual horizontal line HL. The second tilt angle θ2 is set to, for example, not less than 80° and less than 90°. When the panel support housing 73 is positioned at the standing position P2, the panel surface 72s is arranged at a position facing a user who is at the facing position and faces the front surface 2a.

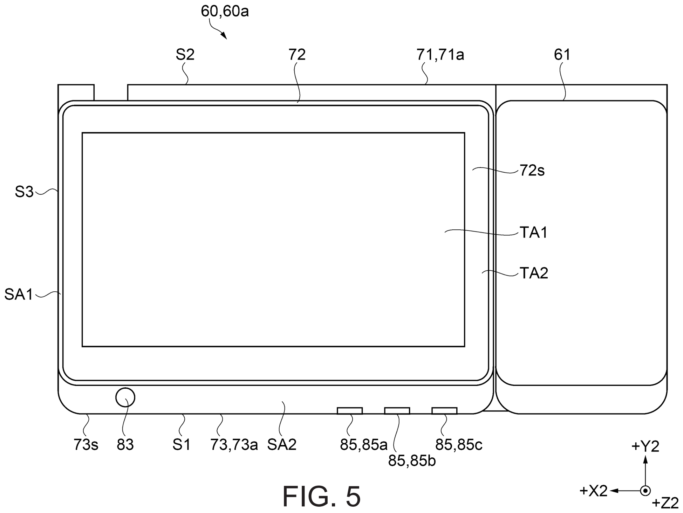

FIG. 5 illustrates a schematic configuration of the operation section 60. FIG. 5 illustrates a schematic configuration of a first operation section 60a, which is an example of the operation section 60. FIG. 5 illustrates the first operation section 60a in plan view from a position facing the panel surface 72s. The first operation section 60a includes the card reading unit 61 and a first control panel 71a.

Figures, including FIG. 5, illustrate a coordinate system including an X2-axis, a Y2-axis, and a Z2-axis. The X2-axis is an axis parallel or substantially parallel to the X1-axis illustrated in FIG. 1 and the like. A +X2 direction is a direction from right to left of the control panel 71 when a user looks straight at the control panel 71. A -X2 direction is a direction from left to right of the control panel 71 when the user looks straight at the control panel 71. The Y2-axis is an axis that are orthogonal to the X2-axis in the panel surface 72s. A +Y2 direction is a direction from the front to the back of the panel surface 72s when the panel support housing 73 is positioned at the stored position P1. A -Y2 direction is a direction from the back to the front of the panel surface 72s when the panel support housing 73 is positioned at the stored position P1. The Z2-axis is an axis orthogonal to the panel surface 72s of the touch panel 72. A +Z2 direction is a direction directed upward from the panel surface 72s. The +Z2 direction corresponds to an example of an upper direction. A -Z2 direction is a direction directed downward from the panel surface 72s. The -Z2 direction corresponds to an example of a lower direction.

The first control panel 71a is an example of the control panel 71. The first control panel 71a includes the touch panel 72, a first panel support housing 73a, a power-saving switching button 83, and a plurality of notification lamps 85.

The touch panel 72 is configured by a display having the input function. The touch panel 72 includes a liquid crystal display, an organic electro-luminescence (EL) display, or the like. A touch input function of the touch panel 72 is configured by a mechanism of a resistive film analog type, a projected capacitance type, an optical type, an infrared type, or the like. The touch panel 72 includes the panel surface 72s. The panel surface 72s includes an image display region TA1 and a peripheral region TA2.

The image display region TA1 is a region where the display screen 100 is displayed and a region where touch input by a user is received. The image display region TA1 corresponds to an example of a display region. The image display region TA1 displays various icons including a menu icon 101 that receives touch input by a user. The display screen 100 displayed in the image display region TA1 will be described in detail later.

The peripheral region TA2 is a region that does not have the display function. The peripheral region TA2 is arranged on an outer periphery of the image display region TA1. The peripheral region TA2 illustrated in FIG. 5 is provided in a form of surrounding the entire outer periphery of the image display region TA1, but is not limited thereto. The peripheral region TA2 may be provided at a position close to the image display region TA1 or a position adjacent to the image display region TA1. A touch input key (not illustrated) may be arranged in the peripheral region TA2.

The touch input key receives touch input by a user. The touch input key is configured by a mechanism of a resistive film analog type, a capacitance type, an optical type, an infrared type, or the like. Desirably, the touch input key is a capacitance type key. When a user performs touch input on the touch input key, the touch input key generates a control signal.

The first panel support housing 73a is an example of the panel support housing 73. The first panel support housing 73a includes the panel support surface 73s having the first end S1, the second end S2, and the third end S3. The first end S1 is a side of the panel support surface 73s in the -Y2 direction. The second end S2 is a side of the panel support surface 73s in the +Y2 direction. The third end S3 is a side of the panel support surface 73s in the +X2 direction. The panel support surface 73s is a surface of the first panel support housing 73a in the +Z2 direction. The panel support surface 73s included in the first panel support housing 73a includes a panel support region SA1 and a member arrangement region SA2.

The panel support region SA1 is a region that supports the touch panel 72. The panel support region SA1 constitutes a part of the panel support surface 73s. The panel support region SA1 corresponds to an example of a display panel support region. The panel support region SA1 surrounds an upper surface of the touch panel 72 in a frame shape when the touch panel 72 is viewed in plan view. The panel support region SA1 is arranged on a side of the second end S2 with respect to the member arrangement region SA2. The panel support region SA1 protrudes from the member arrangement region SA2 in the +Z2 direction.

The member arrangement region SA2 is a region of the panel support surface 73s that does not support the touch panel 72. The member arrangement region SA2 constitutes a part of the panel support surface 73s. The member arrangement region SA2 corresponds to an example of an operation region. The member arrangement region SA2 is a region including the first end S1. The power-saving switching button 83 and the plurality of notification lamps 85 are arranged in the member arrangement region SA2 of the first panel support housing 73a.

The power-saving switching button 83 receives an input operation by a user. The power-saving switching button 83 receives a sleep activation instruction operation and a sleep stop instruction operation as input operations. The sleep activation instruction operation is an input operation for instructing activation of a sleep mode. The sleep mode is a mode for reducing power consumption of the printer 1. The sleep stop instruction operation is an input operation for instructing stop of the sleep mode. The sleep mode corresponds to an example of a power saving mode. A user performs sleep switching input of either the sleep activation instruction operation or the sleep stop instruction operation on the power-saving switching button 83. The sleep switching input corresponds to an example of switching input.

When the power-saving switching button 83 receives the sleep activation instruction operation, the power-saving switching button 83 transmits a power-saving start instruction signal to a control unit (not illustrated). When the power-saving switching button 83 receives the sleep stop instruction operation, the power-saving switching button 83 transmits a power-saving stop instruction signal to the control unit. The power-saving switching button 83 switches the sleep mode of the printer 1 to activation and stop by transmitting the power-saving start instruction signal and the power-saving stop instruction signal to the control unit. The power-saving switching button 83 has a sleep mode switching function of switching the sleep mode of the printer 1 between activation and stop. The power-saving switching button 83 corresponds to an example of a power saving operation switch.

The power-saving switching button 83 is arranged in the member arrangement region SA2. The power-saving switching button 83 is arranged on a side of the first end S1 with respect to the touch panel 72 including the image display region TA1. The power-saving switching button 83 is arranged on a side of the first end S1 with respect to the touch panel 72 including the image display region TA1, so that a user can immediately find the power-saving switching button 83 and perform an input operation.

The power-saving switching button 83 may be configured by a mechanical mechanism that mechanically switches an electrical signal, or may be configured by a mechanism of a resistive film analog type, a capacitance type, an optical type, an infrared type, or the like. The power-saving switching button 83 is desirably configured by the mechanical mechanism. The mechanical mechanism corresponds to an example of a mechanical key. The power-saving switching button 83 is configured by the mechanical mechanism, and thus the reliability and durability of the power-saving switching button 83 are improved.

The power-saving switching button 83 may receive a power supply input instruction operation and a power supply disconnection instruction operation as input operations. The power supply input instruction operation is an instruction to change a power supply of the printer 1 to an on state. The power supply disconnection instruction operation is an instruction to change the power supply of the printer 1 to an off state. When the power-saving switching button 83 receives the power supply input instruction operation, the power-saving switching button 83 transmits a power supply input instruction signal to the control unit. When the power-saving switching button 83 receives the power supply disconnection instruction operation, the power-saving switching button 83 transmits a power supply disconnection instruction signal to the control unit. The power-saving switching button 83 switches the power on and off by transmitting the power supply input instruction signal and the power supply disconnection instruction signal to the control unit. The power-saving switching button 83 may have a power on and off function of switching the power on and off. The power on and off function corresponds to an example of a power supply operation function.

The power-saving switching button 83 is desirably a mechanical mechanism.

The power-saving switching button 83 is configured by the mechanical mechanism, and thus the reliability and durability of the power-saving switching button 83 are improved.

The power-saving switching button 83 desirably has the power on and off function of turning on and off the power.

The power-saving switching button 83 has the sleep mode switching function and the power on and off function, and thus a configuration of the first control panel 71a is simplified.

The notification lamp 85 notifies a user by emitting light. The notification lamp 85 corresponds to an example of a light emitting section. The notification lamp 85 performs various notifications to the user by a color of light, a flashing pattern, a light emission time, and the like. The notification lamp 85 is configured by a light emitting diode (LED) or the like. The notification lamp 85 is arranged in the member arrangement region SA2. The first panel support housing 73a includes a first notification lamp 85a, a second notification lamp 85b, and a third notification lamp 85c.

The first notification lamp 85a, the second notification lamp 85b, and the third notification lamp 85c respectively provide different notifications to the user. The first notification lamp 85a, the second notification lamp 85b, and the third notification lamp 85c are respectively assigned with an error notification, a fax reception notification, and an in-operation notification. The user visually recognizes the first notification lamp 85a and the like to distinguish the various notifications.

The first panel support housing 73a desirably includes the notification lamp 85 that performs a notification by emitting light.

The user can receive various notifications from the printer 1 by visually recognizing the notification lamp 85.

The notification lamp 85 is desirably arranged in the member arrangement region SA2.

The visibility of the notification lamp 85 for the user is improved by arranging the notification lamp 85 in the member arrangement region SA2.

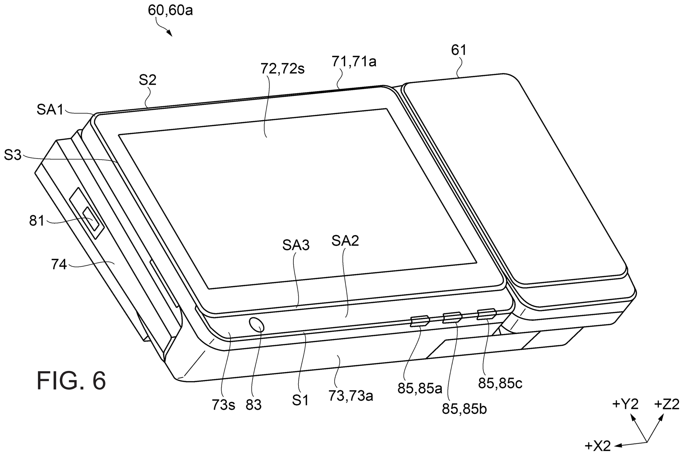

FIG. 6 illustrates a schematic configuration of the operation section 60. FIG. 6 illustrates a schematic configuration of the first operation section 60a, which is an example of the operation section 60. FIG. 6 illustrates the first operation section 60a in perspective view. The first operation section 60a includes the card reading unit 61 and the first control panel 71a.

FIG. 6 illustrates a step section SA3. The step section SA3 is provided in the panel support surface 73s. The step section SA3 partitions the panel support region SA1 and the member arrangement region SA2. The height along the Z2-axis is different between the panel support region SA1 and the member arrangement region SA2 partitioned by the step section SA3.

The height of the panel support region SA1 in the +Z2 direction is higher than the height of the member arrangement region SA2 in the +Z2 direction. The member arrangement region SA2 is arranged in the -Z2 direction from the panel surface 72s of the touch panel 72 supported by the panel support region SA1. When the first panel support housing 73a is positioned at the stored position P1, the member arrangement region SA2 is positioned below the panel surface 72s in the -Z2 direction and in the -Z1 direction.

The panel support surface 73s includes the first end S1 and the member arrangement region SA2 including the power-saving switching button 83, and the member arrangement region SA2 is desirably arranged in the -Z2 direction from the panel surface 72s of the touch panel 72.

By arranging the member arrangement region SA2 in the -Z2 direction from the panel surface 72s, a user can easily distinguish the member arrangement region SA2 from the panel surface 72s. The user is less likely to misidentify the menu icon 101 displayed on the touch panel 72 and the power-saving switching button 83 arranged in the member arrangement region SA2.

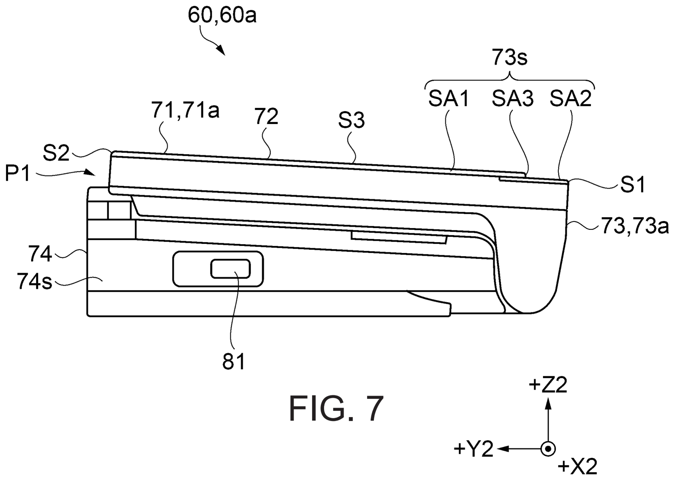

FIG. 7 illustrates a schematic configuration of the operation section 60. FIG. 7 illustrates a schematic configuration of the first operation section 60a, which is an example of the operation section 60. FIG. 7 illustrates the first operation section 60a in plan view from the +X2 direction.

FIG. 7 illustrate the panel support region SA1, the member arrangement region SA2, and the step section SA3 of the panel support surface 73s. The panel support region SA1 is provided at a position in the +Y2 direction of the step section SA3. The member arrangement region SA2 is provided at a position in the -Y2 direction of the step section SA3. The step section SA3 is a step between the member arrangement region SA2 and the panel support region SA1.

The operation section base body 74 is arranged at a position in the -Z2 direction of the first panel support housing 73a. The operation section base body 74 supports the first panel support housing 73a at the stored position P1. The operation section base body 74 includes the base body side surface 74s. The base body side surface 74s is a surface in the +X2 direction of the operation section base body 74. The base body side surface 74s is a surface on a side of the third end S3 that is a side in the +X2 direction.

The connection terminal 81 is arranged on the base body side surface 74s. The connection terminal 81 is desirably arranged at a position closer to the second end S2 than to the first end S1 of the first panel support housing 73a at the stored position P1. By arranging the connection terminal 81 at a position closer to the second end S2 than to the first end S1 of the first panel support housing 73a at the stored position P1, a user is less likely to perform an erroneous operation on the power-saving switching button 83 when attaching or detaching the external device to or from the connection terminal 81.

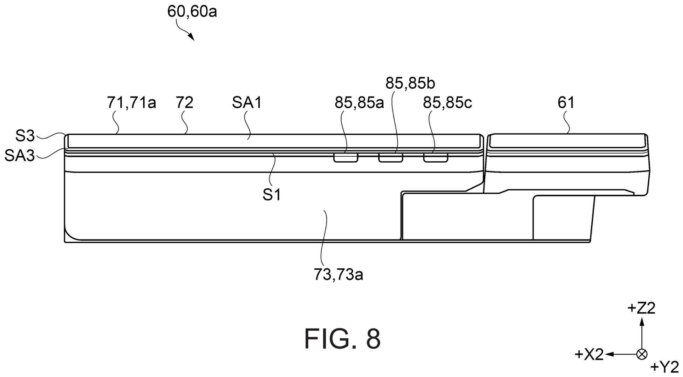

FIG. 8 illustrates a schematic configuration of the operation section 60. FIG. 8 illustrates a schematic configuration of the first operation section 60a, which is an example of the operation section 60. FIG. 8 illustrates the first operation section 60a in plan view from the -Y2 direction.

FIG. 8 illustrates the step section SA3 of the first panel support housing 73a. The step section SA3 of the first panel support housing 73a is provided along the X2-axis. A panel support region SA1 is provided in the +Z2 direction of the member arrangement region SA2. The panel surface 72s is positioned in the +Z2 direction of the member arrangement region SA2. That is, there is a step between the panel surface 72s and the member arrangement region SA2.

The operation section 60 illustrated in FIGS. 5, 6, 7, and 8 includes the card reading unit 61 and the control panel 71, but the present disclosure is not limited thereto. The card reading unit 61 and the control panel 71 may be configured separately. In a case where the card reading unit 61 and the control panel 71 are configured separately, the operation section 60 is configured by the control panel 71.

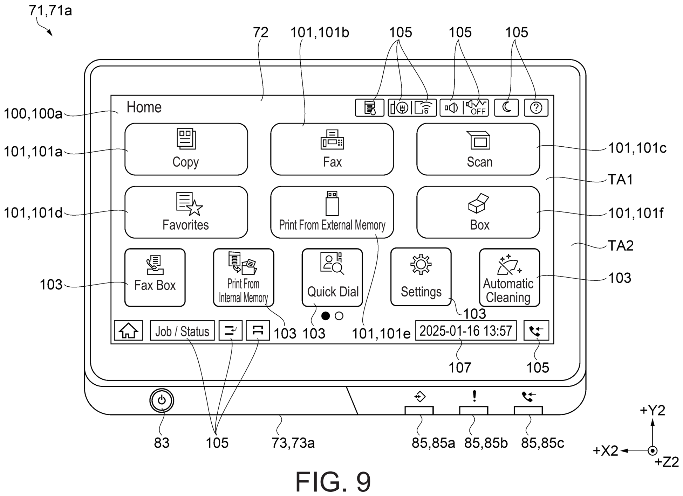

FIG. 9 illustrates a schematic configuration of the control panel 71. FIG. 9 illustrates a schematic configuration of the first control panel 71a that is an example of the control panel 71. FIG. 9 illustrates an example of the display screen 100 displayed on the touch panel 72 of the first control panel 71a.

The touch panel 72 displays various display screens 100 in the image display region TA1. FIG. 9 illustrates a home screen 100a, which is an example of the display screen 100. The home screen 100a is a screen displayed by default on the touch panel 72. The home screen 100a displays a plurality of menu icons 101, a plurality of submenu icons 103, a plurality of function icons 105, and a display image 107. The home screen 100a may display images other than the plurality of menu icons 101, the plurality of submenu icons 103, the plurality of function icons 105, and the display image 107.

The menu icon 101 is displayed in the home screen 100a. The menu icon 101 may be displayed on the display screen 100 other than the home screen 100a. One or more menu icons 101 are displayed on the home screen 100a. The plurality of menu icons 101 are displayed on the home screen 100a illustrated in FIG. 9.

The menu icon 101 receives touch input by a user as an input operation. The menu icon 101 corresponds to an example of a touch key. When the user performs an input operation on the menu icon 101, the touch panel 72 generates a control signal. When the user performs an input operation on each of the plurality of menu icons 101, the touch panel 72 generates a control signal corresponding to the menu icon 101.

The plurality of menu icons 101 are displayed along the X2-axis. The menu icons 101 are displayed in a manner of moving along the X2-axis by an input operation by a user. The menu icon 101 is displayed in a first size, for example. The plurality of menu icons 101 illustrated in FIG. 9 are a copy icon 101a, a fax icon 101b, a scan icon 101c, a favorites icon 101d, a memory print icon 101e, and a box icon 101f.

The copy icon 101a is operated when a user copies a document. When the user performs an input operation on the copy icon 101a, the printer 1 reads a document, generates read data, and prints based on the read data.

The fax icon 101b is operated when a user performs fax transmission. When the user performs an input operation on the fax icon 101b, the printer 1 reads a document and generates read data. The printer 1 transmits the read data to the outside via a telephone line.

The scan icon 101c is operated by a user to read a document and obtain read data. When the user performs an input operation on the scan icon 101c, the printer 1 reads a document and generates read data. The printer 1 stores the read data in an internal memory or the like of the printer 1.

The favorites icon 101d is operated when a user causes the printer 1 to execute an operation registered in advance. When the user performs an input operation on the favorites icon 101d, the printer 1 executes an operation registered in advance.

The memory print icon 101e is operated when the printer 1 is caused to print data stored in an external memory connected to the connection terminal 81. When the user performs an input operation on the memory print icon 101e, the printer 1 prints the data stored in the external memory.

The box icon 101f is operated when a document is saved in the internal memory or when the document is transmitted. When the user performs an input operation on the box icon 101f, the printer 1 performs storage of a document received by fax transmission, and the like.

The submenu icon 103 is displayed in the home screen 100a. The submenu icon 103 may be displayed on the display screen 100 other than the home screen 100a. One or more submenu icons 103 are displayed on the home screen 100a. The plurality of submenu icons 103 are displayed on the home screen 100a illustrated in FIG. 9.

The submenu icon 103 receives touch input by a user as an input operation. When the user performs an input operation on the submenu icon 103, the touch panel 72 generates a control signal. When the user performs an input operation on each of the plurality of submenu icons 103, the touch panel 72 generates a control signal corresponding to the submenu icon 103.

The plurality of submenu icons 103 are displayed along the X2-axis. The submenu icons 103 are displayed in a manner of moving along the X2-axis by an input operation by a user. The submenu icon 103 is displayed in a second size smaller than the first size, for example. The plurality of submenu icons 103 include a fax box icon, an internal memory print icon, a quick dial icon, a setting icon, a cleaning icon, and the like. The plurality of submenu icons 103 are not limited to the fax box icon, the internal memory print icon, the quick dial icon, the setting icon, the cleaning icon, and the like. A function of the submenu icon 103 is set as appropriate.

The function icon 105 is displayed in the home screen 100a and on the display screen 100 other than the home screen 100a. One or more function icons 105 are displayed in the home screen 100a. The function icon 105 may indicate various notifications to a user and a status of the printer 1. The function icon 105 is displayed in a third size smaller than the first size and the second size, for example.

The function icon 105 receives touch input by a user as an input operation. When the user performs an input operation on the function icon 105, the touch panel 72 generates a control signal. When the user performs an input operation on each of the plurality of function icons 105, the touch panel 72 generates a control signal corresponding to the function icon 105.

The plurality of function icons 105 are arranged at predetermined positions in the home screen 100a. The plurality of function icons 105 are fixedly arranged in the display screen 100. The plurality of function icons 105 arranged in the display screen 100 are a status display icon, a LAN connection notification icon, a simple AP connection notification icon, a sound setting icon, an operating sound reduction mode notification icon, a sleep mode setting icon, and the like. The number of the function icons 105 and a function of each function icon 105 are set as appropriate.

The display image 107 is displayed in the various display screens 100 such as the home screen 100a. One or more display images 107 are displayed in the display screen 100. The display image 107 is displayed at a predetermined position in the display screen 100. The display image 107 displays various types of information to be notified to a user. The display image 107 is, for example, a date and time display image for notifying the date and time.

The printer 1 includes the touch panel 72, the power-saving switching button 83, and the first panel support housing 73a. The touch panel 72 includes the image display region TA1. The image display region TA1 displays the menu icon 101 that receives touch input by a user. The power-saving switching button 83 receives sleep switching input for switching the sleep mode. The first panel support housing 73a supports the touch panel 72 so that the touch panel 72 is visible on the panel support surface 73s. The panel support surface 73s has the first end S1 and the second end S2 facing the first end S1. When the user is positioned at the facing position where the user operates the touch panel 72, the first end S1 is arranged at a position closer to the user than the second end S2, and the power-saving switching button 83 is arranged on a side of the first end S1 with respect to the image display region TA1.

The user can immediately find the power-saving switching button 83 arranged on the first operation section 60a.

The first control panel 71a is arranged in the printer 1 such that the first end S1 of the panel support surface 73s included in the first panel support housing 73a faces outward. The first control panel 71a includes the touch panel 72 and the power-saving switching button 83. The touch panel 72 includes the image display region TA1 displaying the menu icon 101. The menu icon 101 receives touch input by the user. The power-saving switching button 83 receives sleep switching input for switching the sleep mode. The panel support surface 73s includes the second end S2 facing the first end S1 and supports the touch panel 72 so that the touch panel 72 is visible. The power-saving switching button 83 is arranged on a side of the first end S1 with respect to the image display region TA1.

The user can immediately find the power-saving switching button 83 arranged on the first operation section 60a.

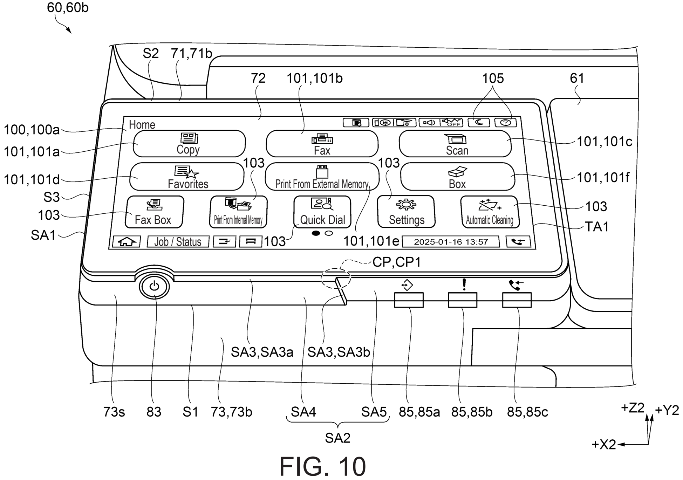

FIG. 10 illustrates a schematic configuration of the operation section 60. FIG. 10 illustrates a schematic configuration of a second operation section 60b, which is an example of the operation section 60. FIG. 10 illustrates the second operation section 60b in perspective view. The second operation section 60b includes the card reading unit 61 and a second control panel 71b. The card reading unit 61 provided in the second operation section 60b includes the same configuration as the card reading unit 61 provided in the first operation section 60a.

The second control panel 71b includes the touch panel 72, a second panel support housing 73b, the power-saving switching button 83, and the plurality of notification lamps 85. The touch panel 72, the power-saving switching button 83, and the plurality of notification lamps 85 of the second control panel 71b includes the same configurations as the touch panel 72, the power-saving switching button 83, and the plurality of notification lamps 85 of the first control panel 71a. A configuration of the second panel support housing 73b is different from the configuration of the first panel support housing 73a.

The second panel support housing 73b includes the panel support surface 73s. A configuration of the panel support surface 73s of the second panel support housing 73b is different from the configuration of the panel support surface 73s of the first panel support housing 73a. The panel support surface 73s of the second panel support housing 73b includes the panel support region SA1, the member arrangement region SA2, and the step section SA3. The panel support region SA1 in the panel support surface 73s of the second panel support housing 73b includes the same configuration as the panel support region SA1 in the panel support surface 73s of the first panel support housing 73a.

The member arrangement region SA2 in the panel support surface 73s of the second panel support housing 73b includes a button arrangement region SA4 and a lamp arrangement region SA5. The button arrangement region SA4 and the lamp arrangement region SA5 are partitioned by the step section SA3.

The button arrangement region SA4 is a region in which the power-saving switching button 83 is arranged. The button arrangement region SA4 corresponds to an example of a switch arrangement region. The button arrangement region SA4 is provided below the panel support region SA1 and the lamp arrangement region SA5 in the -Z2 direction. The button arrangement region SA4 is provided in the -Z2 direction with respect to the panel support region SA1 and the lamp arrangement region SA5, and thus, an erroneous operation of the power-saving switching button 83 by a user is reduced.

The lamp arrangement region SA5 is a region where the plurality of notification lamps 85 are arranged. The lamp arrangement region SA5 corresponds to an example of a light emitting section arrangement region. The lamp arrangement region SA5 is arranged above the button arrangement region SA4 in the +Z2 direction. The lamp arrangement region SA5 is arranged in the +Z2 direction with respect to the button arrangement region SA4, so that the visibility of the notification lamp 85 by a user is improved.

The step section SA3 partitions the panel support region SA1, the button arrangement region SA4, and the lamp arrangement region SA5. The step section SA3 corresponds to an example of a boundary section. The step section SA3 is constituted by a first portion SA3a and a second portion SA3b. The first portion SA3a is provided along the X2-axis. The first portion SA3a is a portion that partitions the panel support region SA1 and the button arrangement region SA4. The second portion SA3b is a portion that intersects the first portion SA3a and partitions the button arrangement region SA4 and the lamp arrangement region SA5. A first step corner section CP1, which is an example of a step corner section CP, is formed at a portion where the first portion SA3a and the second portion SA3b intersect each other. The step corner section CP corresponds to an example of a corner section. The first step corner section CP1 is formed at a predetermined angle.

The member arrangement region SA2 includes the lamp arrangement region SA5 in which the notification lamp 85 is arranged, and the button arrangement region SA4 in which the power-saving switching button 83 is arranged. The button arrangement region SA4 is desirably provided in the -Z2 direction with respect to the lamp arrangement region SA5.

The button arrangement region SA4 is provided in the -Z2 direction with respect to the panel support region SA1 and the lamp arrangement region SA5, and thus, an erroneous operation of the power-saving switching button 83 by a user is reduced.

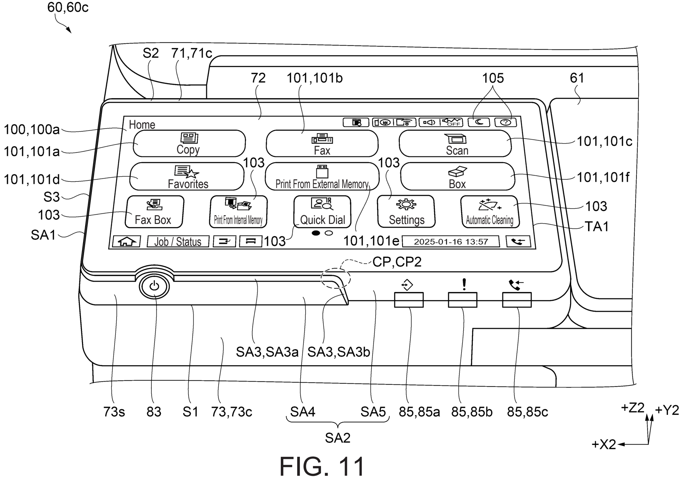

FIG. 11 illustrates a schematic configuration of the operation section 60. FIG. 11 illustrates a schematic configuration of a third operation section 60c, which is an example of the operation section 60. FIG. 11 illustrates the third operation section 60c in perspective view. The third operation section 60c includes a card reading unit 61 and a third control panel 71c. The card reading unit 61 provided in the third operation section 60c includes the same configuration as the card reading unit 61 provided in the first operation section 60a and the second operation section 60b.

The third control panel 71c includes the touch panel 72, a third panel support housing 73c, the power-saving switching button 83, and the plurality of notification lamps 85. The touch panel 72, the power-saving switching button 83, and the plurality of notification lamps 85 of the third control panel 71c includes the same configurations as the touch panel 72, the power-saving switching button 83, and the plurality of notification lamps 85 of the second control panel 71b. A configuration of the third panel support housing 73c is different from the configuration of the second panel support housing 73b.

The third panel support housing 73c includes the panel support surface 73s. A configuration of the panel support surface 73s of the third panel support housing 73c is different from the configuration of the panel support surface 73s of the second panel support housing 73b. The panel support surface 73s of the third panel support housing 73c includes the panel support region SA1, the member arrangement region SA2, and the step section SA3. The panel support region SA1 in the panel support surface 73s of the third panel support housing 73c includes the same configuration as the panel support region SA1 in the panel support surface 73s of the second panel support housing 73b.

The member arrangement region SA2 in the panel support surface 73s of the third panel support housing 73c includes the button arrangement region SA4 and the lamp arrangement region SA5, similarly to the member arrangement region SA2 in the panel support surface 73s of the second panel support housing 73b. The button arrangement region SA4 and the lamp arrangement region SA5 are partitioned by the step section SA3.

The step section SA3 in the panel support surface 73s of the third panel support housing 73c partitions the panel support region SA1, the button arrangement region SA4, and the lamp arrangement region SA5. The step section SA3 is constituted by the first portion SA3a and the second portion SA3b. A second step corner section CP2, which is an example of the step corner section CP, is formed at a portion where the first portion SA3a and the second portion SA3b intersect each other. The step section SA3 includes the second step corner section CP2. The second step corner section CP2 is formed in a curved surface shape. The second step corner section CP2 is formed in a curved surface shape, and thus the accumulation of trash or paper dust in the vicinity of the second step corner section CP2 is reduced.

The panel support surface 73s includes the panel support region SA1 that supports the touch panel 72, and the step section SA3 that partitions the lamp arrangement region SA5, the panel support region SA1, and the button arrangement region SA4. The step section SA3 may include the second step corner section CP2, and the second step corner section CP2 is desirably formed in a curved surface shape.

The second step corner section CP2 is formed in a curved surface shape, and thus the accumulation of trash or paper dust in the vicinity of the second step corner section CP2 is reduced.

The summary of the present disclosure is appended below.

### First note

A printing device includes a display panel including a display region that displays a touch key that receives touch input by a user; a power saving operation switch that receives switching input for switching a power saving mode; and a support housing that includes a support surface having a first side and a second side facing the first side, and that supports the display panel so that the display panel is visible on the support surface, wherein when the user is positioned at an operation position where the user operates the display panel, the first side is arranged at a position closer to the user than the second side and the power saving operation switch is arranged on a side of the first side with respect to the display region.

The user can immediately find the power saving operation switch arranged on the operation unit.

### Second note

The printing device according to first note, wherein the power saving operation switch is a mechanical key.

The power saving operation switch is configured by the mechanical key, and thus the reliability and durability of the power saving operation switch are improved.

### Third note

The printing device according to first note or second note, wherein the power saving operation switch has a power supply operation function of turning on and off a power supply.

The power saving operation switch has a function of switching the power saving mode and the power supply operation function, and thus a configuration of the operation unit is simplified.

### Fourth note

The printing device according to any one of first note to third note, wherein the support housing includes a light emitting section that performs notification by emitting light.

The user can receive various notifications from the printing device by visually recognizing the light emitting section.

### Fifth note

The printing device according to fourth note, wherein the support surface has the first side and an operation region including the power saving operation switch and the operation region is arranged below a display surface of the display panel.

By arranging the operation region below the display surface of the display panel, the user can easily distinguish the operation region from the display surface of the display panel. The user is less likely to misidentify the touch key displayed on the display panel and the power saving operation switch arranged in the operation region.

### Sixth note

The printing device according to fifth note, wherein the light emitting section is arranged in the operation region.

The light emitting section is arranged in the operation region, and thus the visibility of the operation region for the user is improved.

### Seventh note

The printing device according to fifth note or sixth note, wherein the operation region includes a light emitting section arrangement region in which the light emitting section is arranged and a switch arrangement region in which the power saving operation switch is arranged and the switch arrangement region is provided below the light emitting section arrangement region.

The switch arrangement region is provided below the display surface of the display panel and the light emitting section arrangement region, and thus, an erroneous operation of the power saving operation switch by the user is reduced.

### Eighth note

The printing device according to seventh note, wherein the support surface includes a display panel support region that supports the display panel and a boundary section that partitions the light emitting section arrangement region, the display panel support region, and the switch arrangement region, the boundary section includes a corner section, and the corner section is formed in a curved surface shape.

The corner section is formed in a curved surface shape, and thus the accumulation of trash or paper dust in the vicinity of the corner section is reduced.

### Ninth note

The printing device according to any one of first note to eighth note further includes a unit base body that supports the support housing, wherein the support surface includes a third side connected to the first side and the second side, the unit base body has a unit side surface arranged on a side of the third side, and a connector for connecting to an external apparatus is provided on the unit side surface.

By providing the connector on the unit side surface of the unit base body, the user can attach and detach the external apparatus without erroneously touching the display panel or the like.

### Tenth note

An operation unit arranged in a printing device with a first side of a support surface included in a support housing facing outward, the operation unit includes a display panel including a display region that displays a touch key that receives touch input by a user and a power saving operation switch that receives switching input for switching a power saving mode, wherein the support surface has a second side facing the first side and supports the display panel so that the display panel is visible and the power saving operation switch is arranged on a side of the first side with respect to the display region.

The user can immediately find the power saving operation switch arranged on the operation unit.

## Claims

1. A printing device comprising:
a display panel including a display region that displays a touch key that receives touch input by a user;
a power saving operation switch that receives switching input for switching a power saving mode; and
a support housing that includes a support surface having a first side and a second side facing the first side, and that supports the display panel so that the display panel is visible on the support surface, wherein
when the user is positioned at an operation position where the user operates the display panel, the first side is arranged at a position closer to the user than the second side and
the power saving operation switch is arranged on a side of the first side with respect to the display region.

2. The printing device according to claim 1, wherein
the power saving operation switch is a mechanical key.

3. The printing device according to claim 1, wherein
the power saving operation switch has a power supply operation function of turning on and off a power supply.

4. The printing device according to claim 1, wherein
the support housing includes a light emitting section that performs notification by emitting light.

5. The printing device according to claim 4, wherein
the support surface has the first side and an operation region including the power saving operation switch and
the operation region is arranged below a display surface of the display panel.

6. The printing device according to claim 5, wherein
the light emitting section is arranged in the operation region.

7. The printing device according to claim 5, wherein
the operation region includes a light emitting section arrangement region in which the light emitting section is arranged and a switch arrangement region in which the power saving operation switch is arranged and
the switch arrangement region is provided below the light emitting section arrangement region.

8. The printing device according to claim 7, wherein
the support surface includes
a display panel support region that supports the display panel and
a boundary section that partitions the light emitting section arrangement region, the display panel support region, and the switch arrangement region,
the boundary section includes a corner section, and
the corner section is formed in a curved surface shape.

9. The printing device according to claim 1, further comprising:
a unit base body that supports the support housing, wherein
the support surface includes a third side connected to the first side and the second side,
the unit base body has a unit side surface arranged on a side of the third side, and
a connector for connecting to an external apparatus is provided on the unit side surface.

10. An operation unit arranged in a printing device with a first side of a support surface included in a support housing facing outward, the operation unit comprising:
a display panel including a display region that displays a touch key that receives touch input by a user and
a power saving operation switch that receives switching input for switching a power saving mode, wherein
the support surface has a second side facing the first side and supports the display panel so that the display panel is visible and
the power saving operation switch is arranged on a side of the first side with respect to the display region.
